# FASCICULE DE BREVET EUROPEEN

(11) **EP 1 461 248 B1**
(45) Date de publication et mention de la délivrance du brevet: **21.06.2006**
(21) Numéro de dépôt: 02799822.8
(22) Date de dépôt: 18.12.2002
(51) Int. Cl.: B64G 1/50

(54) **VEHICULE SPATIAL A RADIATEURS DEPLOYABLES**
RAUMFAHRZEUG MIT AUSZIEHBAREN ABSTRAHLERN
SPACE CRAFT WITH EXTENSIBLE RADIATORS

(30) Priorité: 02.01.2002 FR 0200006
(43) Date de publication de la demande: 29.09.2004
(73) Titulaire: EADS ASTRIUM SAS, 31402 Toulouse Cedex 4 (FR)
(72) Inventeur: Walker, Andrew Nicholas, 31000 Toulouse (FR); Guerin, Jean-Pierre, 78146 Velizy-Villacoublay (FR)
(74) Mandataire: Bérogin, Francis
(86) Numéro de dépôt international: PCT/FR2002/004428
(87) Numéro de publication internationale: WO 2003/059740

(56) Documents cités:
- EP-A- 0 780 293
- WO-A-99/19212
- US-A- 5 927 654
- SANTO A G ET AL: "Near Earth asteroid rendezvous spacecraft overview" AEROSPACE APPLICATIONS CONFERENCE, 1996. PROCEEDINGS., 1996 IEEE ASPEN, CO, USA 3-10 FEB. 1996, NEW YORK, NY, USA,IEEE, US, 3 février 1996 (1996-02-03), pages 131-144, XP010159043 ISBN: 0-7803-3196-6

## Description

L'invention concerne les véhicules spatiaux munis de radiateurs de chaleur destinés à dissiper, vers l'espace noir, l'énergie thermique générée à bord du véhicule.

Elle concerne plus particulièrement les véhicules spatiaux destinés à constituer des satellites placés sur une orbite géosynchrone, et notamment sur une orbite géostationnaire, stabilisés de façon qu'un axe déterminé du satellite reste dirigé vers la terre.

Ce dernier cas est celui des satellites des télécommunications, qui portent des antennes principales destinées, lorsque le satellite est à poste, à rester orientées de façon précise vers une zone de la terre.

La puissance électrique nécessaire à la charge utile des véhicules spatiaux, et notamment des satellites géostationnaires, est fournie par un ou des panneaux solaires orientables autour d'un axe afin de les maintenir pointés vers le soleil. Sur les satellites géostationnaires, cet axe de rotation des panneaux solaires, dit axe Y, est orienté nord-sud.

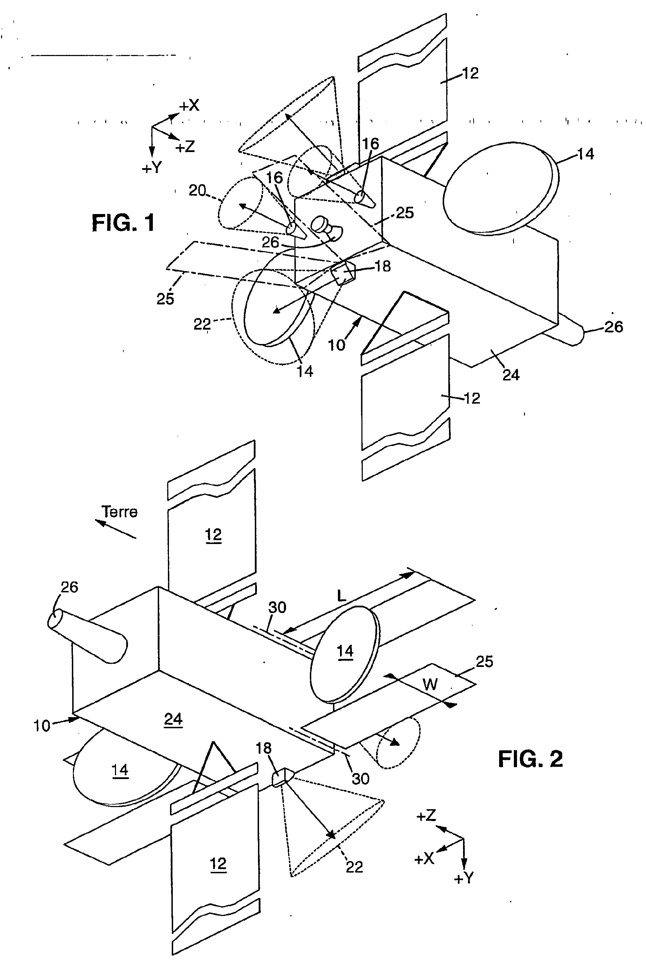

Classiquement, les satellites géostationnaires de ce genre présentent une constitution générale du genre montrée en figure 1.

Le corps 10 du satellite contient les réservoirs d'ergol, la charge utile, la case à équipement et l'électronique de bord.

Trois axes Z, Y et X liés au satellite sont destinés à être orientés respectivement vers la terre, dans la direction nord-sud et dans la direction est-ouest lorsque le satellite est à poste. En général le corps du satellite a une forme parallélépipédique avec des faces nord et sud, une face orientée vers la terre et une face opposée à la terre, souvent dénommée face arrière.

Les panneaux solaires 12 sont portés par les faces nord et sud et sont orientables autour de l'axe Y.

Les antennes principales de télécommunication 14 sont montées latéralement de part et d'autre du satellite, à distance des faces est et ouest (ou d'une d'elles seulement) pour dégager leur lobe d'émission ou de réception. Ces antennes principales doivent rester pointées de façon précise vers les zones de la terre à couvrir, du fait qu'elles ont un lobe étroit.

Pour assurer le maintien à poste du satellite, le corps 10 porte des tuyères de faible poussée 16, alimentables par des ergols, dont certaines sont placées à l'extrémité du satellite opposée à la terre. Sur les satellites récents, ces tuyères sont complétées par un ou des organes de poussée à plasma 18. Les tuyères ou générateurs génèrent, en fonctionnement, des jets ou "plumes" 20 et 22 de gaz chaud à grande vitesse. L'impact de ces jets sur des surfaces provoque des couples indésirables, réduit le rendement des tuyères ou générateur ionique et risque de dégrader les surfaces.

Classiquement, des surfaces radiatives fixes 24 sont prévues sur les faces nord et sud du satellite et sont reliées thermiquement aux charges du satellite qui génèrent de la chaleur, par exemple par des caloducs. L'augmentation de la puissance thermique générée sur les satellites à grande puissance récents rend insuffisante la surface de dissipation thermique des surfaces radiatives fixes. En conséquence, on a conçu des satellites comportant de plus des radiateurs déployables, qui sont appliqués contre le corps du satellite lors du lancement et qui sont ultérieurement déployés, généralement par basculement, pour les amener dans une orientation nord et/ou sud). On a notamment cherché à réaliser des configurations telles que les radiateurs, à l'état déployé, ne se placent pas dans le lobe des antennes principales de télécommunication. On a en particulier (WO 99/19212) proposé un satellite dont les radiateurs déployables peuvent être basculés autour d'une charnière depuis une position où ils sont stockés contre la face nord ou sud jusqu'à une position où ils se trouvent à l'opposé de la terre (direction dite - Z).

Cette disposition permet de ne pas perturber le fonctionnement des antennes principales de télécommunication. De plus, en plaçant les charnières obliquement, on peut amener les radiateurs 25 dans une configuration divergente qui les soustrait sensiblement à l'impact des gaz chaud à grande vitesse qui risque de les endommager.

Cette disposition présente une limitation grave car elle ne prend pas en considération d'autres problème. Pour permettre de reprendre le contrôle d'un satellite lorsqu'il a perdu son orientation nominale, par exemple du fait d'une erreur de navigation ou d'une panne, il n'est pas possible d' utiliser des communications par l'intermédiaire des antennes principales 14 dont le lobe est très étroit. Il est en conséquence courant de placer une antenne omnidirectionnelle 26 (c'est-à-dire ayant un champ de vision d'au moins 2 II stéradians) orientée dans la direction -Z (nominalement à l'opposé de la terre) et souvent aussi une antenne 26 dans la direction +Z. Dans ce dernier cas, chacune des antennes omnidirectionnelles couvre la moitié de l'espace et l'ensemble permet de maintenir la communication entre la terre et le satellite, quelle que soit l'orientation de ce dernier.

Mais, pour que ce résultat soit atteint, il est nécessaire que le champ de vision des antennes omnidirectionnelle ne soit pas obscurci, faute de quoi peuvent exister des zones aveugles dans la couverture de l'antenne, d'où un risque de perte de contact avec le satellite.

La présente invention vise notamment à fournir un véhicule spatial présentant une disposition de radiateurs déployables évitant tout à la fois de masquer le champ de vision de l'antenne ou des antennes principales de télécommunication, d'interférer avec le jet des tuyères du générateur et de gêner le champ de vision d'une antenne omnidirectionnelle portée par la face arrière du véhicule spatial.

Dans ce but, l'invention propose notamment un véhicule spatial ayant un corps, au moins une antenne principale de télécommunication ayant une orientation déterminée par rapport au corps, au moins une antenne omnidirectionnelle ayant un champ de vision à l'opposé de celui des antennes principales et au moins un radiateur déployable par basculement autour d'un axe de basculement lié au corps du véhicule entre une position de stockage où il est appliqué contre le corps et une position déployée, caractérisé en ce que le dit axe de basculement est placé sensiblement dans le plan d'une face du corps qui est parallèle à l'orientation de l'axe du champ de vision de l'antenne omnidirectionnelle et aux faces (ou à la face) portant l'antenne principale, le dit axe de basculement étant placé de façon que le radiateur puisse basculer d'un angle proche de 180° d'une position de stockage où il est plaqué contre une face portant un panneau solaire à une position où il s'étend sensiblement dans le plan de la face qui le porte à l'état stocké.

Dans le cas particulier où le véhicule spatial est un satellite ayant un corps, au moins une antenne principale de télécommunication portée par une face est ou ouest, au moins une antenne omnidirectionnelle portée par une face à l'opposé de la terre et au moins un radiateur déployable par basculement autour d'un axe Lié au corps du satellite entre une position de stockage où il est appliqué contre la face nord ou sud du corps et une position déployée, caractérisé en ce que le dit axe est placé sensiblement dans le plan de la face nord ou sud contre laquelle s'applique le radiateur stocké et est placé de façon que le radiateur bascule d'un angle égal à ou proche de 180° de la position de stockage à une position où il s'étend vers l'est et l'ouest à partir du corps, derrière une antenne principale.

Dans la pratique, l'angle de basculement du radiateur sera compris entre 140 et 180°, mais il est avantageux que le radiateur ou chaque radiateur s'étende sensiblement dans le plan de la face qui le porte à l'état stocké, c'est à dire soit orthogonal à la direction Y lorsqu'il est déployé.

En général, chacune des faces nord et sud portera au moins un ou plus généralement deux radiateurs.

Si les axes de basculement des radiateurs sont parallèles à la direction Z, la longueur maximale des radiateurs permettant de les stocker (sauf en cas de radiateur en deux parties repliables l'une sur l'autre) est limitée à la largeur du satellite dans la direction X (direction est-ouest), largeur qui est généralement inférieure à la longueur dans la direction Z. En orientant les axes de basculement sensiblement à 45° de la direction Z, il est possible de donner aux radiateurs une envergure presque égale à la longueur du satellite dans la direction Z, à condition de ne pas commander le déploiement des radiateurs pour certaines orientations des panneaux solaires.

Les caractéristiques ci-dessus ainsi que d'autres apparaîtront mieux à la lecture de la description qui suit de modes particuliers de réalisation de l'invention, donnés à titre d'exemple non limitatif.

La description se réfère aux dessins qui l'accompagnent, dans lesquels:
- la figure 1, déjà mentionnée, montre la constitution de principe d'un satellite représentatif ;

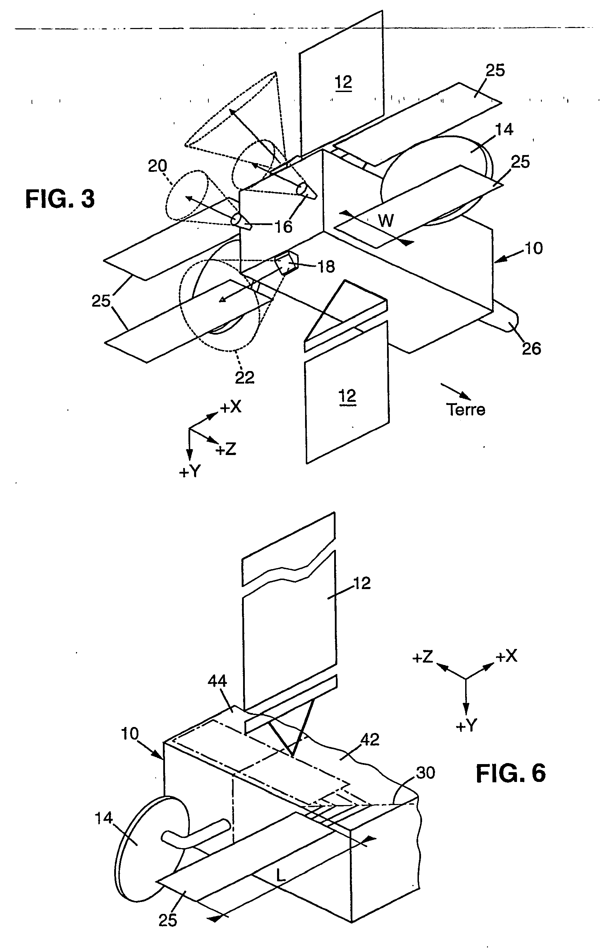

- les figures 2 et 3, similaires à la figure 1, sont des vues en perspective montrant une disposition possible de radiateurs conforme à l'invention ;
- la figure 4 est une vue en plan montrant une face nord ou sud d'un satellite, avec une autre disposition de radiateurs conforme à l'invention ;
- la figure 5 est une vue dans la direction nord - sud montrant l'emplacement des radiateurs déployés, en cas de basculement autour d'un axe oblique ; et
- la figure 6 est une vue partielle en perspective du montage d'un radiateur selon la figure 5.

Le satellite dont l'architecture de principe est montrée en figure 2, où les éléments correspondant à ceux de la figure 1 portent le même numéro de référence, porte, en, plus des surfaces radiatives fixes 24 de constitution classique, quatre radiateurs 25. Deux de ces radiateurs sont prévus pour basculer symétriquement autour d'un axe 30 de direction Z, d'une position de stockage où ils sont plaqués contre la face nord à une position déployée où ils se trouvent pratiquement dans le prolongement de cette face nord, derrière les réflecteurs des antennes principales 14 de façon à ne pas interférer avec le lobe de ces antennes. La largeur W de ces radiateurs est ainsi limitée à cette de l'emplacement libre derrière les réflecteurs antennes 14 . Leur longueur L est limitée à la largeur du corps dans la direction X. Le mécanisme de déploiement peut être de constitution classique et par exemple être constitué par un ou des ressorts qui amènent le radiateur dans une position déployée déterminée par une butée lorsqu'un verrou de retenue est désarmé, par exemple par voie pyrotechnique en réponse à une commande depuis le sol.

Une seconde paire de radiateurs 25 est placée de façon à venir se palcer sensiblement dans le prolongement de la face sud lorsqu'ils sont déployés.

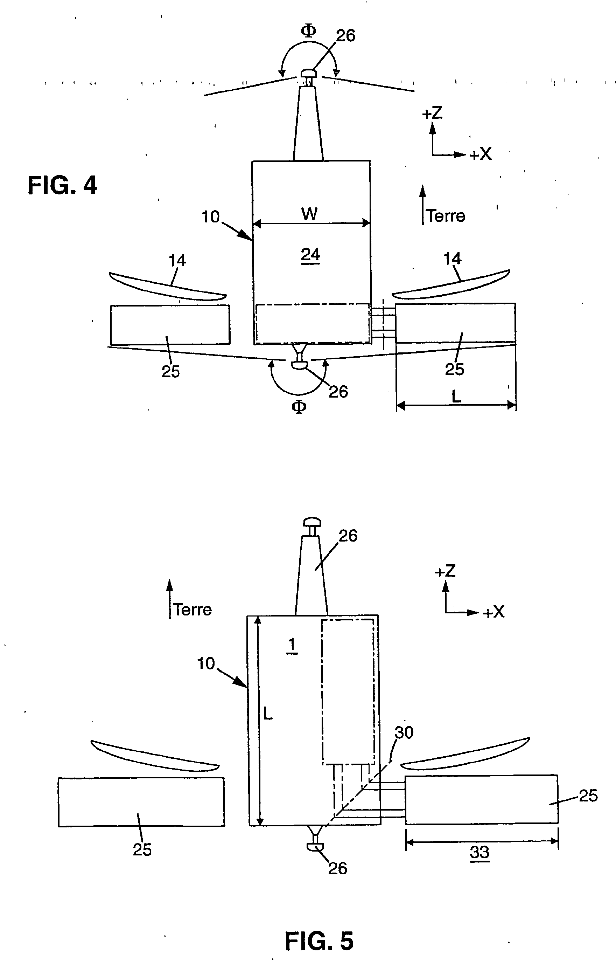

On voit que les radiateurs déployés n'interfèrent pas avec le lobe des antennes principales. Ils ne se placent pas non plus dans le jet des tuyères 16 et des générateurs de poussée 16 destinés à fonctionner lorsque que le satellite est déjà sur son orbite définitive , alors que les radiateurs sont déployés. Enfin, comme le montre la figure 4, ils ne pénètrent pas non plus dans le lobe Φ des antennes omnidirectionnelles 26, même pour un angle solide pouvant dépasser légèrement 2 π stéradians.

Pour qu'il soit possible de stocker les radiateurs sans qu'ils débordent du corps du satellite, dans la position montrée en tirets, leur longueur L ne doit pas dépasser la largeur du corps 10 dans la direction X. Cette limitation peut être écartée en disposant l'axe 30 de basculement sensiblement suivant la bissectrice de l'angle X, Z ou -X, Z suivant le cas. Dans ce cas la longueur L n'est limitée que par la longueur du corps suivant la direction Z. En contrepartie la largeur de chaque radiateur est limitée par la présence de l'axe qui supporte le panneau solaire. Il faut encore relever que le corps d'un satellite de télécommunication est souvent fractionné en un module de service ou « bus » 42 placé à l'opposé de la terre et un module de charge utile 44 placé côté terre. Le montage suivant les figures 5 et 6 permet, pour une dimension appropriée des pattes de liaison avec le charnière, de supprimer toute obstruction du module de service pendant le séjour sur l'orbite de transfert.

## Revendications

1. Véhicule spatial ayant un corps (10), au moins une antenne principale (14) de télécommunication ayant une orientation déterminée par rapport audit corps (10), et au moins un radiateur (25) déployable par basculement autour d'un axe respectif de basculement (30) entre une position de stockage dans laquelle ledit radiateur (25) est appliqué contre ledit corps (10) et une position déployée, où ledit axe de basculement (30) est lié audit corps (10) dudit véhicule et placé sensiblement dans le plan d'une première face (24) dudit corps (10), qui porte un panneau solaire (12), ledit axe de basculement (30) étant orienté de façon que ledit radiateur (25) bascule d'un angle proche de 180° de ladite position de stockage dans laquelle ledit radiateur (25) est plaqué contre ladite première face (24) portant ledit panneau solaire (12) à ladite position déployée dans laquelle ledit radiateur (25) s'étend sensiblement dans le plan de ladite première face (24) contre laquelle ledit radiateur (25) est plaqué à l'état stocké et **caractérisé en ce qu'**il a aussi au moins une antenne omnidirectionelle (26) ayant un champ de vision à l'opposé de celui de ladite au moins une antenne principale (14) et **en ce que** ledit radiateur (25), dans ladite position déployée est en saillie vers l'extérieur dudit corps (10) par rapport à une deuxième face du corps (10) qui porte ladite au moins une antenne principale (14) ou est parallèle à une face du corps (10) portant ladite au moins une antenne principale (14), et du côté de ladite au moins une antenne principale (14) qui est à l'opposé du côté du champ de vision de ladite au moins une antenne principale (14).

2. Véhicule selon la revendication 1, constitué par un satellite ayant au moins une antenne principale (14) de télécommunication portée par une face est ou ouest du corps (10) et dont le champ de vision est dirigé sensiblement vers la Terre, au moins une antenne omnidirectionnelle (26) portée par une face du corps (10) à l'opposé de la Terre et au moins un radiateur (25) déployable, par basculement autour d'un axe (30) respectif entre une position de stockage dans laquelle ledit radiateur (25) est appliqué contre une face nord ou sud dudit corps (10) et une position déployée, **caractérisé en ce que** ledit axe (30) est lié au corps (10) du satellite et placé sensiblement dans le plan de ladite face nord ou sud contre laquelle s'applique le radiateur (25) stocké, et est orienté de façon que ledit radiateur (25) bascule d'un angle égal à ou proche de 180° de ladite position de stockage à ladite position déployée, dans laquelle ledit radiateur (25) s'étend vers l'est ou l'ouest à partir du corps (10) et du côté de ladite au moins une antenne principale qui est à l'opposé du côté du champ de vision de ladite au moins une antenne principale (14).

3. Véhicule selon la revendication 1 ou 2, **caractérisé en ce que** l'angle de basculement dudit radiateur (25) est compris entre 140 et 180°.

4. Véhicule selon la revendication 2, **caractérisé en ce que** chacune desdites faces nord et sud porte au moins un ou généralement deux radiateurs (25), s'étendant l'un vers l'est et l'autre vers l'ouest dudit corps (10) en position déployée.

5. Véhicule selon la revendication 2 ou 4, **caractérisé en ce que** ledit axe (30) de basculement est orienté sensiblement à 45° de la direction de la Terre et ledit radiateur (25) a une envergure presque égale à la longueur du satellite dans la direction de la Terre.

6. Véhicule selon la revendication 1 ou 3, **caractérisé en ce que**, dans le plan de ladite première face (24) du corps (10) dans lequel l'axe de basculement (30) est placé, ledit axe de basculement (30) est orienté sensiblement parallèlement à ladite deuxième face du corps (10) qui porte ladite au moins une antenne principale (14).

7. Véhicule selon la revendication 1 ou 3, **caractérisé en ce que**, dans ledit plan de ladite première face (24) du corps (10) dans lequel l'axe de basculement (30) est placé, ledit axe de basculement (30) est incliné, de préférence d'un angle sensiblement de 45°, sur la direction de ladite deuxième face du corps (10) qui porte ladite au moins une antenne principale (14).

## Claims

1. A spacecraft having a body (10), at least one main telecommunications antenna (14) having a given orientation with respect to said body (10), and at least one radiator (25) deployable by flipping about a respective flip axis (30) between a storage position, in which said radiator (25) is held against said body (10), and a deployed position in which said flip axis (30) is linked to said body (10) of said craft and positioned substantially in the plane of a first face (24) of said body (10) which carries a solar panel (12), said flip axis (30) being oriented such that said radiator (25) flips through an angle close to 180° from said storage position, in which said radiator (25) is flat against said first face (24) carrying said solar panel (12) to said deployed position in which said radiator (25) extends substantially in the plane of said first face (24) against which said radiator (25) is held when stored and **characterized in that** it further has at least one omnidirectional antenna (26) having a field of view opposite to that of said at least one main antenna (14) and **in that** said radiator (25) in said deployed position projects outside of said body (10) with respect to a second face of the body (10) which carries said at least one main antenna (14) or is parallel to a face of the body (10) carrying said at least main antenna (14), and on the side of said at least one main antenna (14) which is opposite to the side of the field of view of said at least one main antenna (14).

2. The spacecraft as claimed in claim 1, consisting of a satellite having at least one main telecommunications antenna (14) mounted on an east or west face of the body (10) and which field of view is substantially directed toward the Earth, at least one omnidirectional antenna (26) mounted on a face of the body (10) away from the Earth and at least one radiator (25) deployable by flipping about a respective axis (30) between a storage position, in which said radiator (25) is held against a north or south face of said body (10), and a deployed position **characterized in that** said axis (30) is linked to said body (10) of the satellite and positioned substantially in the plane of said north or south face against which the radiator (25) is held when stored, and is oriented such that said radiator (25) flips through an angle equal to or close to 180° from said storage position, to said deployed position in which said radiator (25) extends toward the east or the west from the body (10), and on the side of said at least one main antenna which is opposite to the side of the field of view of said at least one main antenna (14).

3. The spacecraft as claimed in either of claims 1 and 2, **characterized in that** the tilt angle of said radiator (25) is in the range of 140° to 180°.

4. The spacecraft as claimed in claim 2, **characterized in that** each of said north and south faces carry at least one, or generally two radiators (25), extending one toward the east and the other toward the west from said body (10) in the deployed position.

5. The spacecraft as claimed in either of claims 2 and 4, **characterized in that** said flip axis (30) is oriented at substantially 45° to the direction of the Earth and said radiator (25) has a span almost equal to the length of the satellite in the direction of the Earth.

6. The spacecraft as claimed in claims 1 or 3, **characterized in that** said flip axis (30) is oriented substantially parallel to said second face of said body (10) which carries said at least one main antenna (14) in the plane of said first face (24) of the body (10) in which said flip axis (30) is positioned.

7. The spacecraft as claimed in claims 1 or 3, **characterized in that** said flip axis (30) is inclined, preferably substantially, at 45°, to the direction of said second face of the body (10) which carries said at least one main antenna (14), in said plane of said first face (24) of the body (10) in which the flip axis (30) is positioned.

## Patentansprüche

1. Raumfahrzeug mit einem Körper (10), zumindest einer Hauptfernmeldeantenne (14) mit einer vorbestimmten Ausrichtung zu dem Körper (10) und zumindest einem Strahler (25), der durch Schwenken um eine jeweilige Schwenkachse (30) zwischen einer Lagerposition in der der Strahler (25) an dem Körper (10) angebracht ist und einer ausgefahrenen Position ausfahrbar ist, wobei die Schwenkachse (30) mit dem Körper (10) des Fahrzeugs verbunden ist und im Wesentlichen auf der Ebene einer ersten Fläche (24) des Körpers (10) angeordnet ist, die ein Solarzellenpaneel (12) trägt, wobei die Schwenkachse (30) derart ausgerichtet ist, dass der Strahler (25) um einen Winkel von annähernd 180° von der Lagerposition, in der der Strahler (25) an die das Solarzellenpaneel (12) tragende erste Fläche (24) gedrückt wird, zu der ausgefahrenen Position schwenkt, in der sich der Strahler (25) im Wesentlichen in der Ebene der ersten Fläche (24) erstreckt, an die der Strahler (25) im Lagerzustand gedrückt wird, **dadurch gekennzeichnet, dass** es auch zumindest eine Rundstrahlantenne (26) mit einem zu der zumindest einen Hauptantenne (14) entgegengesetzten Sichtfeld hat und **dadurch**, dass der in der ausgefahrenen Position befindliche Strahler (25) in Richtung der Außenseite des Körpers (10) bezüglich einer zweiten Fläche des Körpers (10) übersteht, die die zumindest eine Hauptantenne (14) trägt, oder parallel zu einer Fläche des Körpers (10) ist, die die zumindest eine Hauptantenne (14) trägt, und auf Seiten der zumindest einen Hauptantenne (14) ist, die zur Seite des Sichtfelds der zumindest einen Hauptantenne (14) entgegengesetzt ist.

2. Fahrzeug nach Anspruch 1, das durch einen Satelliten gebildet ist, der zumindest eine Hauptfernmeldeantenne (14), die von einer östlichen oder westlichen Seite des Körpers (10) getragen wird und deren Sichtfeld im Wesentlichen in Richtung der Erde gerichtet ist, zumindest eine Rundstrahlantenne (26), die von einer der Erde entgegengesetzten Seite des Körpers (10) getragen wird, und zumindest einen Strahler (25) aufweist, der durch Schwenken um eine jeweilige Schwenkachse (30) zwischen einer Lagerposition, in der der Strahler (25) an einer nördlichen oder südlichen Seite des Körpers (10) anliegt, und einer ausgefahrenen Position ausfahrbar ist, **dadurch gekennzeichnet, dass** die Achse (30) mit dem Körper (10) des Satelliten verbunden ist und im Wesentlichen auf der Ebene der nördlichen oder südlichen Seite angeordnet ist, an die der gelagerte Strahler (25) angebracht ist, und derart ausgerichtet ist, dass der Strahler (25) um einen Winkel gleich oder annähernd 180° von der Lagerposition zu der ausgefahrenen Position schwenkt, in der sich der Strahler (25) in Richtung Osten oder Westen von dem Körper (10) weg und seitlich von der zumindest einen Hauptantenne erstreckt, die sich entgegengesetzt zu der Seite des Sichtfelds der zumindest einen Hauptantenne (14) befindet.

3. Fahrzeug nach Anspruch 1 oder 2, **dadurch gekennzeichnet, dass** der Schwenkwinkel des Strahlers (25) zwischen 140 und 180° liegt.

4. Fahrzeug nach Anspruch 2, **dadurch gekennzeichnet, dass** jede der Nord- und Südflächen zumindest einen oder im Allgemeinen zwei Strahler (25) trägt, von denen sich in ausgefahrener Position der eine in Richtung Osten und der andere in Richtung Westen von dem Körper (10) erstreckt.

5. Fahrzeug nach Anspruch 2 oder 4, **dadurch gekennzeichnet, dass** die Schwenkachse (30) im Wesentlichen im 45°-Winkel zur Erdrichtung ausgerichtet ist und der Strahler (25) eine Spannweite hat, die nahezu gleich der Länge des Satelliten in Erdrichtung ist.

6. Fahrzeug nach Anspruch 1 oder 3, **dadurch gekennzeichnet, dass** in der Ebene der ersten Fläche (24) des Körpers (10), in der die Schwenkachse (30) angeordnet ist, die Schwenkachse (30) im Wesentlichen parallel zu der zweiten Fläche des Körpers (10) ausgerichtet ist, die die zumindest eine Hauptantenne (14) trägt.

7. Fahrzeug nach Anspruch 1 oder 3, **dadurch gekennzeichnet, dass** in der Ebene der ersten Fläche (24) des Körpers (10), in der die Schwenkachse (30) angeordnet ist, die Schwenkachse (30) vorzugsweise in einem Winkel von im Wesentlichen 45° in Richtung der zweiten Fläche des Körpers (10) geneigt ist, die die zumindest eine Hauptantenne (14) trägt.
